# EUROPEAN PATENT APPLICATION

(11) **EP 4 756 407 A1**
(43) Date of publication of application: **10.06.2026**
(21) Application number: 24217650.1
(22) Date of filing: 05.12.2024
(51) Int. Cl.: G01N 17/02

(54) **ELECTRIC SYSTEM AND CORROSION DETERMINATION METHOD**

(71) Applicant: Hitachi Energy Ltd, 8050 Zürich (CH)
(72) Inventor: Meng, DeLun, 100018 Beijing (CN); Zhang, Hui, 100101 Beijing (CN); Wang, Yang, 100077 Beijing (CN); Wozniak, Michal, 91-748 Lódz (PL); Usarek, Krzysztof, 30-716 Kraków (PL)
(74) Representative: Epping - Hermann - Fischer

(57) **Abstract**

In one embodiment, the electric system (1) comprises a static electric induction device (2) and an electrochemical impedance spectroscopy, EIS, sensor (3), wherein
- the electric system (1) comprises a protective coating (4) to protect a component (21, 22, 23, 24, 25) of the electric system (1) from an exterior (A),
- the EIS sensor (3) comprises a working electrode (31), a reference electrode (32) and a counter electrode (33), a test portion (40) of the protective coating (4) directly extends across the working electrode (31), the reference electrode (32) and the counter electrode (33),
- the working electrode (31) is of areal fashion and is surrounded by the reference electrode (32), the latter being surrounded by the counter electrode (33), seen in top view of the test portion (40), and
- the EIS sensor (3) is configured to provide information about a corrosion state of the protective coating (4).

## Description

An electric system is provided. A corrosion determination method using such an electric system is also provided.

Document CN 221 507 023 U refers to an offshore wind coating impedance monitoring sensor.

Documents US 5 859 537 A and US 6 911 828 B1 refer to corrosion sensors.

A problem to be solved is to provide an electric system in which damage due to corrosion in a harsh environment can efficiently be avoided.

This object is achieved, inter alia, by an electric system and by a corrosion determination method as defined in the independent claims. Exemplary further developments constitute the subject-matter of the dependent claims.

For example, the electric system is a transformer system comprising a transformer in a tank and further comprising a radiator, a conservator tank, a control box and/or one or a plurality of bushing turrets. For example, the transformer comprises a magnetic core and one or more windings at the core. The components of the system are exposed to an exterior, like air over sea, and are protected with a protective coating. Corrosion of the protective coating is monitored and/or predicted by means of an electrochemical impedance spectroscopy, EIS, sensor which has a working electrode, a reference electrode and a counter electrode as well as a test portion. By means of the EIS sensor, progress of the corrosion of the protective coating can be detected or estimated, for example.

Using an EIS sensor offers a precise and cost-efficient way to provide the information about the corrosion. Using an areal working electrode allows for improved accuracy.

The corresponding method described herein applies to the on-site ambient corrosivity indication of a transformer, for example.

Corrosion due to the degradation and failure of the protective coating is a risk with high potential for transformer systems during long term service in the field, especially for transformer systems used in harsh and highly corrosive environmental conditions, like used in offshore wind energy plants. The corrosion of the transformer system may lead to serious property loss and further personal injury. So, the inspection for the coating on transformers becomes more and more critical to avoid serious damage.

Manual visual inspection is a commonly used method for coating ageing status evaluation. However, the drawbacks for manual visual inspection are obvious. First, manual visual inspection is not real-time and cannot be done remotely, and additional costs and efforts are needed for frequent inspection on-site. Secondly, it is not easy to inspect some specific areas of a transformer in field manually due to the constrains of transformer design and the layout for installation in the field. Thirdly, the ongoing degradation/deterioration on a protective coating without visible damage cannot be indicated by visual inspection, even worse, a potential failure could have already occurred.

In order to monitor the ageing status and to detect the early failure of the coating on the transformer in real time, herein a method is proposed by means of which an electrical system, like a transformer component, can be evaluated concerning the ageing status and early failure of the coating on the transformer can also be detected.

Thus, said electric system comprises one or more sensor electrodes configured to measure the characteristic parameter change of the protective coating on, for example, the transformer, and said at least one sensor electrode is arranged on the surface of said coating or embedded in said coating, or the at least one sensor electrode is painted by said coating and arranged close to but not in physical contact with said coating.

For example, the at least one sensor electrode is made of one or of a plurality of metallic materials. The metallic material used for the at least one sensor electrode is consistent with a coating substrate of the transformer, for example, the metallic material and a substrate material are the same.

It is possible that the at least one sensor electrode is electrically connected with a measurement module, also referred to as evaluation unit. Measured characteristic parameters of the coating can be or can include, for example, impedance, phase angle and/or specific frequency.

The measurement module is possibly be powered by a battery. Otherwise, the measurement module can be powered by a local low voltage circuit of the transformer. An enclosure of the measurement module is optionally made of metallic material and coated with the same protective coating as the component of the electric system. The at least one sensor electrode can be arranged on or embedded in the protective coating of the measurement module, said protective coating can also be referred to as test portion. For example, the enclosure of the measurement module and/or of the sensor probe is made of the same metallic material, coating and coating process as the coated part of the component to be measured.

Moreover, the method described herein can be used to evaluate the ageing status and to detect the early failure of the coating on the component. The method may comprise all or some of the following steps, the order of the steps could be as stated:
- Performing a correlation build up for coating degradation level and parameters measured by the sensor electrode and the measurement module, including:
   -- Determining accelerated corrosion factors and environment parameters based on on-site environment conditions of the transformer.
   -- Preparing the at least one sensor electrode made up of the same metallic material as the coating substrate of the component, and applying the coating to be measured by the same coating process as coating on transformer.
   -- Preparing a test panel made up of the same metallic material as the coating substrate of the component, and applying the coating to be measured by the same coating process as the coating on the component.
   -- During the previous method step, arranging the at least one sensor electrode on the substrate of one or more test panels, and the at least one sensor electrode is covered by the coating.
   -- Arranging the at least one sensor electrode on the coating surface of one or more test panel.
   -- Conducting the accelerated corrosion ageing test on the test panels and sensor electrodes.
   -- Running a visual inspection for test panels at the designed time intervals during accelerated corrosion ageing test to determine the degradation level of the coating.
   -- Measuring the parameter changes of the coating by the at least one sensor electrode and the measurement module in real time.
   -- Building up the correlation between the degradation level of the coating on the test panel and the parameter changes of the coating measured by the at least one sensor electrode.
   - Then, performing coating degradation status monitoring and early failure detection in real time is done by using the electric system and the correlation built up obtained in the step of performing a correlation build up for.

Hence, with the electric system and method described herein, evaluating the ageing status and detecting the early failure of the coating on, for example, a transformer remotely in real time is enabled. Thus, the cost and effort for on-site manual inspection can be reduced; the safety risk for on-site manual inspection can be mitigated; further damage due to corrosion of, for example, transformer operation in the field can be avoided; the reliability of the electric system can be increase with predictive maintenance.

In at least one embodiment, the electric system comprises a static electric induction device and an electrochemical impedance spectroscopy, EIS, sensor, wherein
- the electric system further comprises a protective coating to protect a component of the electric system from an exterior of the electric system,
- the EIS sensor comprises a working electrode, a reference electrode and a counter electrode, a test portion of the protective coating directly extends across the working electrode, the reference electrode and the counter electrode,
- the working electrode is of areal fashion and is surrounded by the reference electrode, the latter being surrounded by the counter electrode, seen in top view of the test portion, and
- the EIS sensor is configured to provide information about a corrosion state of the protective coating.

The working electrode, the reference electrode and the counter electrode as well as the test portion of the protective coating altogether may collectively also be referred to as sensor probe and/or sensor electrode and could be designed as a single unit. Said sensor probe may be connected with the evaluation unit by means of an electric wiring, for example.

For example, there is an electric insulation between the working electrode and the reference electrode as well as between the counter electrode and the reference electrode. The electric insulation may be of an organic or inorganic solid material. Otherwise, the electric insulation may be of a gas. The electric insulation may have a constant thickness so that a distance between the working electrode and the reference electrode and/or between the counter electrode can be set to fixed values.

The static electric induction device, like the transformer, may be supplemented by or replaced with an electric shunt reactor or an electric series reactor, an instrument transformer, a capacitor, a disconnector, an air-insulated switchgear, AIS, a gas insulated switchgear, GIS, and/or a gas insulated transmission line, GIL. That is, the term `static electric induction device' may analogously read on any power electronic device configured to handle currents of at least 0.1 kA and/or of at least 3.6 kV, for example. It is possible that the static electric induction device comprises a core and one or more windings at the core. Hence, all the embodiments and examples described herein may not only refer to an electric system comprising the static electric induction device and especially the EIS sensor but in the same manner also to an electric system comprising a power electronic device, like the electric reactor, instrument transformer, capacitor, disconnector, AIS, GIS, and/or GIL or the like, and the EIS sensor.

According to at least one embodiment, the working electrode is an innermost electrode of the EIS sensor or the sensor probe. Thus, the working electrode can be located in a center of the sensor probe.

According to at least one embodiment, seen in top view test portion, the working electrode is a continuous and uninterrupted electrode. In other words, the working electrode can be free of any holes or depressions. The working electrode may thus be a disk. A sensor probe with such a working electrode can be manufactured in a cost-efficient manner and can increase accuracy as disturbances on the working electrode can be kept small. Especially, as there is no inner part of the working electrode to be filled with another material, possible influences of such a material on the measurement of the corrosion can be avoided.

According to at least one embodiment, the working electrode is predominantly or completely covered by the test portion. That is, the protective coating may directly be applied on the working electrode, especially all over the working electrode.

According to at least one embodiment, the test portion is configured to be in direct contact with the exterior. The same may apply for the protective coating. In other words, the test portion can optionally be part of an outer hull of the respective component.

According to at least one embodiment, in an intended use of the electric system the exterior is a gas. For example, the gas comprises oxygen and water vapor. Especially, the gas is air over sea water. Thus, the exterior may also contain one or a plurality of chlorine, sulfur dioxide or sodium. Hence, the EIS sensor may provide the corrosion information for the typical environment the electric system is used in the field.

For example, the static electric induction device is a transformer so that the electric system could be a transformer system. Accordingly, the component may possibly be selected from the following group: transformer tank that may house the transformer, radiator, conservator tank, control box, bushing turret. There can be more than one of said components in the electric system, like all the aforementioned components. It is also possible that the electric system comprises more than one static electric induction device, that is, more than one transformer, for example.

According to at least one embodiment, seen in top view of the test portion, the working electrode and the reference electrode and the counter electrode are of rotational symmetric fashion. It is further possible that these electrodes are arranged in a concentric manner. For example, the working electrode is a circular disk and the reference electrode as well as the counter electrode are circular rings of different diameters. Hence, a particular cost-efficient, robust and simple arrangement of the electrodes is possible.

According to at least one embodiment, the EIS sensor further comprises an evaluation unit, also referred to as measurement module. The evaluation unit is configured to determine at least one of an impedance, an electric resistance, an inductance, a phase angle or a capacitance of the test portion by means of the working electrode, the reference electrode and the counter electrode. For example, changes in the at least one of the impedance, an electric resistance, an inductance, a phase angle or a capacitance are influenced by a weak alternating current through the coating of the test portion due to, for example, an applied small sinusoidal AC perturbation with generally a wave signal of 5 mV to 50 mV at frequencies ranging from 10 Hz to 100 kHz.

According to at least one embodiment, the evaluation unit is configured to calculate a corrosion indication parameter from the at least one of the impedance, the electric resistance, the inductance, the phase angle or the capacitance of the test portion. Hence, the evaluation unit may be configured for both: measuring the relevant electric parameter, like the impedance, the electric resistance, the inductance, the phase angle or the capacitance of the test portion, and to calculate the corrosion indication parameter from said measurement. Otherwise, the evaluation unit may be for measuring the relevant parameter only and the calculating the corrosion indication parameter may be done by another unit of the EIS sensor or also of the electric system.

According to at least one embodiment, the evaluation unit is further configured to output a corrosion status warning when the corrosion indication parameter leaves a predefined range, the corrosion status warning being indicative of a degree of corrosion of the protective coating. Otherwise, this may be done by the another unit. Hence, it is possible that the EIS sensor can be a stand-alone device capable of performing the required measurements and also capable of providing the corrosion status warning.

According to at least one embodiment, the at least one of the impedance, the electric resistance, the inductance, the phase angle or the capacitance of the test portion is determined by using an alternating current, AC for short. For example, a test frequency of the AC is at least 10 Hz or is at least 0.1 kHz or is at least 1 kHz. Alternatively or additionally, said test frequency is at most 0.2 MHz or is at most 100 kHz.

According to at least one embodiment, the evaluation unit is an integral part of the component. Thus, the evaluation unit may not be separated from the component without damaging or destructing the evaluation unit and/or the component. Hence, the evaluation unit can be secured from being easily lost during operation of the electric system in the field.

According to at least one embodiment, the evaluation unit and at least one of the working electrode, the reference electrode and the counter electrode are connected with the evaluation unit by means of a wiring. The wiring may run across the component on a top surface of the component or may be buried in the protective coating or may be incorporated in the component. Hence, there can be a wiring exclusively for the EIS sensor, or the wiring can be an integral part of the component.

According to at least one embodiment, the EIS sensor further comprises a substrate at which the working electrode, the reference electrode and the counter electrode are arranged. Thus, said substrate may be a carrier of the sensor probe. By means of the substrate the sensor probe may be a self-supporting device.

For example, the substate is made of a same metallic material as an outer hull of the component. By way of example, the substrate is of or includes aluminum and/or steel. The working electrode, the reference electrode and the counter electrode may electrically be insulated from the substrate or otherwise the substrate may be part of the wiring connecting said electrodes.

According to at least one embodiment, the substrate together with the working electrode, the reference electrode, the counter electrode and optionally the electric insulation as well as optionally the test portion is an adhesive label. Hence, the sensor probe can efficiently be placed onto the component and may also efficiently be replaced in case of a defect.

The test portion may be an integral part of the adhesive label. Otherwise, it is possible that the substrate with the electrodes is placed onto the component and afterwards the protective coating including the test portion is provided. Thus, the adhesive label may in this case be coated with the protective coating, and the test portion may not be a part of the adhesive label as applied.

According to at least one embodiment, seen in top view of the test portion, a mean diameter of the working electrode is at least 0.5 mm or is at least 5 mm or is at least 2 cm. Alternatively or additionally, said mean diameter is at most 0.3 m or is a most 15 cm or is at most 5 cm.

If the respective area is not of exact circular fashion, then for the mean diameter D it applies: D = (4A/π)^{1/2}, wherein A is an area content of the respective area.

According to at least one embodiment, seen in top view of the test portion, a mean diameter of the counter electrode is at least 1.1 times or is at least 1.3 times or is at least 1.7 times the mean diameter of the working electrode. Alternatively or additionally, said factor is at most ten or is at most five or is at most three.

According to at least one embodiment, a thickness of at least one of the working electrode, the reference electrode or the counter electrode is at least 20 pm or is at least 0.01 mm or is at least 0.1 mm or is at least 0.6 mm. Alternatively or additionally, said thickness is at most 15 mm or is at most 5 mm or is at most 1 mm. The working electrode, the reference electrode and/or the counter electrode can all have a same thickness or may alternatively have different thicknesses, to account for a geometry of the component the sensor probe is to be applied on.

According to at least one embodiment, the test portion is an integral part of the protective coating. Outside the sensor probe, the protective coating may directly be applied at the component, especially directly at a metallic outer hull of the component. Hence, seen with the bare eye the test portion may not be distinguishable from a remainder of the protective coating.

According to at least one embodiment, the working electrode, the reference electrode and the counter electrode with the test portion on them are close to the component. In other words, the sensor probe may be close to or next to the component. 'Close to' may mean that there is a line of sight from the assigned component or the protective coating to the sensor probe solely running through solids and/or that a distance between the assigned component or the protective coating to the sensor probe is at most 0.1 m or is at most 1 cm or is at most 1 mm. By having such an arrangement, the component and the EIS sensor, especially the sensor probe, can be kept at the same environmental conditions for an increased precision.

In this case, the test portion can be distant from a remainder of the protective coating directly at the component. Thus, the test portion and the protective coating may not touch.

According to at least one embodiment, at least one of the working electrode, the reference electrode or the counter electrode with the test portion on them are distant from the component. Hence, the test portion can be distant from the protective coating which may be applied directly at the metallic outer hull of the component. 'Distant' may mean that there is no line of sight from the assigned component to the sensor probe solely running through solids and/or that a distance between the assigned component to the sensor probe is at least 1 cm or is at least 0.1 m or is at least 1 m or is at least 10 m. Thus, the EIS sensor, especially the sensor probe, and the component can be handled independently of one another.

According to at least one embodiment, the electric system further comprises a remote communication unit, like a data receiver. Moreover, the EIS sensor may further comprise a transmitter, like a data transmission unit. The transmitter is configured to send the information about the corrosion state of the protective coating to the remote communication unit. Thus, the information about the corrosion state can wirelessly be sent. Alternatively, the transmitter may send data about the at least one measured parameter, that is, the at least one of the impedance, the electric resistance, the inductance, the phase angle or the capacitance of the test portion to the remote communication unit, and the remote communication unit forwards these data to another unit, like a computer, to determine the information about the corrosion state. Optionally, the transmitter is part of the evaluation unit.

According to at least one embodiment, a distance between the remote communication unit and the transmitter is at least 1 km or is at least 10⁴ m. Alternatively or additionally, said distance may be at most 10⁵ m. Thus, the information about the corrosion state or the data of the at least one measured parameter can be sent over a relatively large distance.

A data connection between the remote communication unit and the transmitter could either be a wireless connection or also a wire-based connection.

According to at least one embodiment, the electric system comprises a plurality of the components and a plurality of the sensor probes, and a plurality of the protective coatings. For example, each one of the components is provided with its own protective coating.

According to at least one embodiment, said protective coatings are of different material compositions and/or thicknesses. In other words, depending on the respective requirements the components can individually be coated with protective coatings. It is possible that the same protective coating is used for at least two of the components.

According to at least one embodiment, said components are each provided with one of the sensor probes, and each of said protective coatings is assigned at least one of the test portions. Hence, the different protective coatings may individually by monitored by the at least one EIS sensor.

An operating method for the electric system is additionally provided. By means of the method, the electric system as indicated in connection with at least one of the above-stated embodiments can be operated. Features of the electric system are therefore also disclosed for the method and vice versa.

In at least one embodiment, the corrosion determination method is for the electric system and comprises the following steps, for example, in the order given below:
- providing a first one and a second one of the EIS sensors,
- performing an accelerated aging test with the first one of the EIS sensors in a test exterior and determining the predefined range of the corrosion indication parameter,
- providing the second one of the EIS sensors with the predefined range of the corrosion indication parameter, and
- placing the second one of the EIS sensors in the electric system.

For example, the corrosion protection level and the potential early failure of the protective coating in same environmental conditions can be indicated. Thus, corrosion protection level indication in the field by using the EIS sensor can be achieved.

For example, the method to evaluate the ageing status and to detect the early failure of the coating on the component may comprise the following steps, for example, in the stated order:
- Conducting the accelerated corrosion ageing test for a standard test panel and the sensor electrode to determine accelerated corrosion factors and environment parameters based on the on-site environment conditions of the electric system;
- Running a visual inspection for the standard test panels at designed time intervals during the accelerated corrosion ageing test to determine the degradation level of the coating;
- Measuring the characteristic parameter changes of the coating by said sensor electrodes and said measurement module in real time;

- Building up a correlation for the coating degradation level and characteristic parameter changes measured by said sensor electrode and said measurement module;
- Arranging the EIS sensor on an in-service electric system in the on-site environment conditions for measuring the characteristic parameter changes of the coating in real time; and
- Determining the degradation status and detecting early failure of said coating in real time by using the correlation previously built up.

An electric system and an operating method described herein are explained in greater detail below by way of exemplary embodiments with reference to the drawings. Elements which are the same in the individual figures are indicated with the same reference numerals. The relationships between the elements are not shown to scale, however, but rather individual elements may be shown exaggeratedly large to assist in understanding.

In the figures:
- Figure 1: is a schematic top view of an exemplary embodiment of an electric system described herein,
- Figure 2: is a schematic sectional view of an exemplary embodiment of an EIS sensor for electric systems described herein,
- Figure 3: is a schematic side view of an exemplary embodiment of an electric system described herein,
- Figure 4: is a schematic perspective view of an exemplary embodiment of an electric system described herein,
- Figure 5: is a schematic top of an exemplary embodiment of an EIS sensor for electric systems described herein,
- Figure 6: is a schematic perspective view of an exemplary embodiment of an EIS sensor for electric systems described herein,
- Figure 7: is a schematic top of an exemplary embodiment of an EIS sensor for electric systems described herein,
- Figures 8: and 9 are schematic block diagrams of exemplary embodiments of operating methods for electric systems described herein,
- Figure 10: is a schematic representation of an electric scheme of an exemplary embodiment of an EIS sensor for electric systems described herein, and
- Figure 11: is a schematic representation of electric data of an exemplary embodiment of EIS sensor for electric systems described herein and of an aging test.

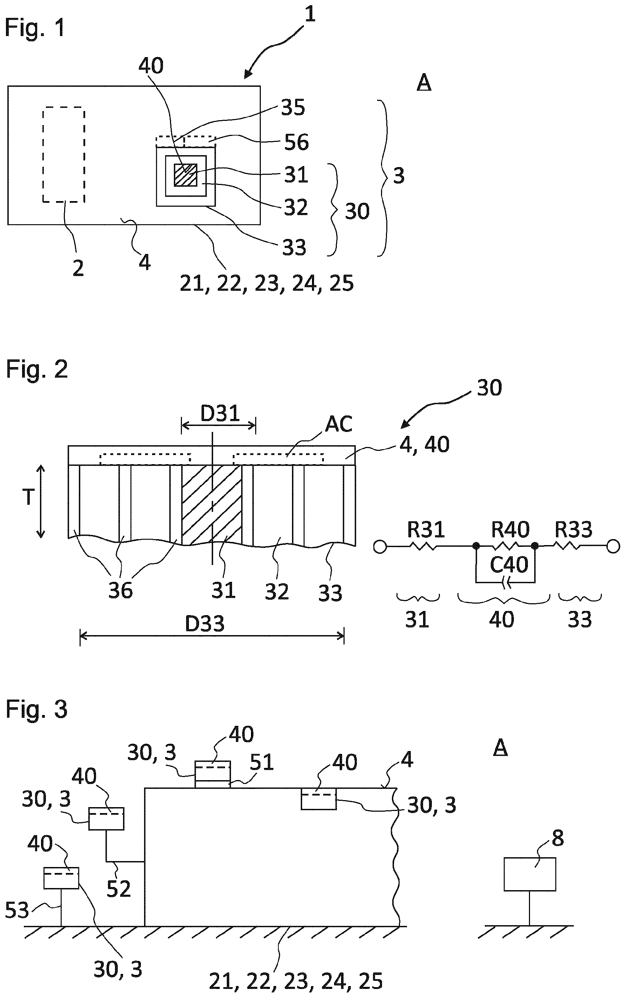

Figure 1 illustrates an exemplary embodiment of an electric system 1. The electric system 1 comprises a static electric induction device 2, for example, a transformer. The static electric induction device 2 may be configured for an electrical power of at least 0.1 MW or of at least 1 MW or at least 10 MW and/or of at most 0.1 GW or at most 1 GW, for example. Further, the electric system 1 comprises one or a plurality of components 21, 22, 23, 24, 25 which may be related to the operation of the static electric induction device 2. By way of example, the component 21 is a transformer tank 21 in which at least an active part of the transformer 2, like a core and windings, is placed in an insulating liquid like transformer oil.

The electric system 1 is in an exterior A. For example, the exterior A is air, especially air over seawater. Thus, the exterior A may comprise oxygen, water, chlorine and sodium. Hence, the exterior A may have a relatively high corrosivity for metals like steel.

To protect the at least one component 21, 22, 23, 24, 25 from the exterior A, said component is provided with a protective coating 4. For example, the protective coating 4 is an organic lacquer system or paint system, possibly containing a plurality of layers.

Further, the electric system 1 comprises an electrochemical impedance spectroscopy, EIS, sensor 3. The EIS sensor 3 has a sensor probe 30 and an evaluation unit 35. The sensor probe 30 comprises a central working electrode 31 which is surrounded by a reference electrode 32 and a counter electrode 33. For measuring and/or evaluating an electric signal obtained by means of the electrodes 31, 32, 33, the EIS sensor 3 further comprises an evaluation unit 35. The electrodes 31, 32, 33 are covered by a test portion 40 which can be of a same material, thickness and/or layer composition as the protective coating 4. By means of the electrodes 31, 32, 33 and the evaluation unit 35, corrosion of the test portion 40 and, thus, of the protective coating 4 is determined or estimated.

Optionally, there is a transmitter 56 by means of which data obtained by the evaluation unit 35 may be sent to an exterior receiver, not shown.

In Figure 2, an example of the sensor probe 30 is shown in more detail. The sensor probe 30 and in particular the electrodes 31, 32, 33 are of rotational symmetric fashion contrary to the polygonal, like square, geometry illustrated in Figure 1. That is, the electrodes 31, 32, 33 are arranged in a concentric manner.

Between the working electrode 31 and the reference electrode 32 on the one hand and the reference electrode 32 and the counter electrode 33 on the other hand is an electric insulation 36 which is, for example, of an organic material or of an inorganic material like an oxide and/or nitride. A diameter D33 of the counter electrode 33 is, for example, about twice a diameter D31 of the working electrode 31. A thickness T of the electrodes 31, 32, 33 could be in the mm range.

All the electrodes 31, 32, 33 can uniformly been covered with the test portion 40 which can be part of the protective coating 4. The test portion 40 can directly be applied on the electrodes 31, 32, 33 and optionally on the electric insulation 36, The electrodes 31, 32, 33 and optionally the electric insulation 36 can terminate in a common plane towards the test portion 40 so that a side of the test portion 40 facing the electrodes 31, 32, 33 is flat.

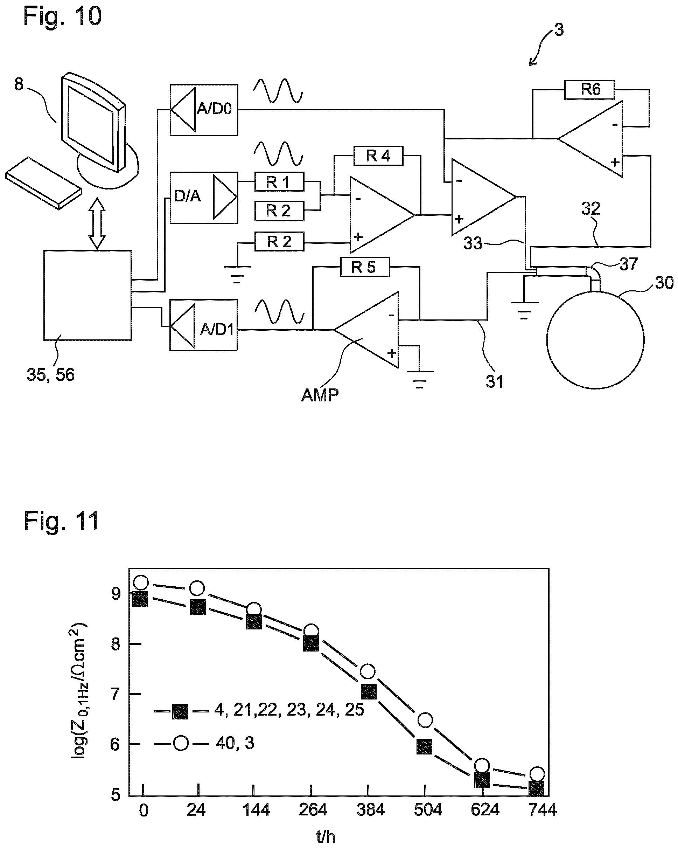

Due to corrosion, a weak electric alternating current, AC, can occur in the test portion 4, symbolized in Figure 2 by the lines labelled with AC. An equivalent circuit diagram is also shown in Figure 2. The electrodes 31, 33 may be represented by electric resistors R31, R33, respectively, and the test portion 40 may be assigned a capacitance C40 and an electric resistance R40. By corrosion, the values C40, R40 may change which can have an influence of at least one of an impedance, an electric resistance, an inductance, a phase angle or a capacitance measured by means of the electrodes 31, 32, 33 when applying an AC voltage in the kHz range, for example, see also Figure 11 below. A frequency of the AC voltage may be at least 10 Hz and at most 100 kHz, for example.

By way of example, the diameter D31 of working electrode 31 is 11.3mm, an inner diameter of the reference electrode 32 is 12.3 mm, an outer diameter of the reference electrode 32 is 16.7 mm, an inner diameter of the counter electrode 33 is 17.7 mm, an outer diameter of the counter electrode 33 is 21.0 mm, and a gap, that is a thickness of the electric insulation 36, between each one of the electrodes 31, 32, 33 is 0.5 mm. These values may individually or collectively apply to all the examples of the sensor probe 30, for example, with a tolerance of at most 50% or of at most 20%.

Otherwise, the same as to Figure 1 may also apply to Figure 2, and vice versa.

In the example of the electric system 1 of Figure 3 it is shown that the overall EIS sensors 3 or at least the sensor probes 30 could be attached to the at least one component 21, 22, 23, 24, 25 in various ways. In all these ways, the test portion 40 can be of the same fashion as the protective coating 4, for example, concerning material, thickness and layer composition, or the test portion 40 and the protective coating 4 differ in one or more of their material, thickness and layer composition.

In a first possibility, the EIS sensor 3 or the sensor probe 30 is integrated in the component 21, 22, 23, 24, 25. Thus, the test portion 40 can be an integral part of the protective coating 4. It is possible that the EIS sensor 3 or the sensor probe 30 may not be seen at the component 21, 22, 23, 24, 25 with the bare eye, and the protective coating 4 may thus not show any elevations or roughening or marking in the area of the EIS sensor 3 or the sensor probe 30. Otherwise, there can be an elevation, recess, roughening and/or marking in the area of the EIS sensor 3 or the sensor probe 30 so that the location of the sensor probe 30 can easily be found.

In a second possibility, the respective EIS sensor 3 or sensor probe 30 is directly attached to the assigned component 21, 22, 23, 24, 25. For example, there is just a first connection means 51, like an adhesive, between the respective EIS sensor 3 or sensor probe 30 and the assigned component 21, 22, 23, 24, 25. For example, a distance between the respective EIS sensor 3 or sensor probe 30 and the assigned component 21, 22, 23, 24, 25 is at most 1 cm or is at most 1 mm. Optionally, there is only solid matter between the respective EIS sensor 3 or sensor probe 30 and the assigned component 21, 22, 23, 24, 25. For example, the respective EIS sensor 3 or sensor probe 30 is an adhesive label directly attached onto the protective coating 4 of the assigned component 21, 22, 23, 24, 25.

In a third possibility, the respective EIS sensor 3 or sensor probe 30 is attached to the assigned component 21, 22, 23, 24, 25 by means of a second connection means 52. For example, the second connection means 52 is a rodding or a bar by means of which the respective EIS sensor 3 or sensor probe 30 is attached to the assigned component 21, 22, 23, 24, 25. The second connection means 52 may be applied onto the respective protective coating 4 or may be attached to a mechanical contact point of the assigned component 21, 22, 23, 24, 25. By means of such second connection means 52, the respective EIS sensor 3 or sensor probe 30 can be close at the assigned component 21, 22, 23, 24, 25 and can experience the same environmental conditions of the exterior A but may not interfere with the protective coating 4 or the assigned component 21, 22, 23, 24, 25 itself.

In a fourth possibility, the EIS sensor 3 or sensor probe 30 is located distant from the assigned component 21, 22, 23, 24, 25. This can be done, for example, by using a holder 53 which is not in direct contact with the assigned component 21, 22, 23, 24, 25. For example, the holder 53 is attached to the ground or a platform the electric system 1 is mounted on.

These four exemplarily possibilities can in any combination be present in all the examples of the electric system 1.

As a further option, the electric system 1 may include a remote communication unit 8. It is possible that the remote communication unit 8 is located quite far away from the components 21, 22, 23, 24, 25. For example, a distance between the components 21, 22, 23, 24, 25 and the remote communication unit 8 is at least 1 km or is at least 10 km. For example, the remote communication unit 8 is configured to receive signals from the at least one transmitter of the at least one EIS sensor 3. Thus, for example, if the transformer 2 and the components 21, 22, 23, 24, 25 are placed offshore, the remote communication unit 8 can be placed onshore so that monitoring of the information about the corrosion state can be done onshore, and offshore work is required only if an alarm is issued by the at least one EIS sensor 3 via the at least one transmitter and the remote communication unit 8. Such a remote communication unit 8 and such at least one transmitter 56, compare Figure 1, can be present in all other examples of the electric system 1 as well.

Otherwise, the same as to Figures 1 and 2 may also apply to Figure 3, and vice versa.

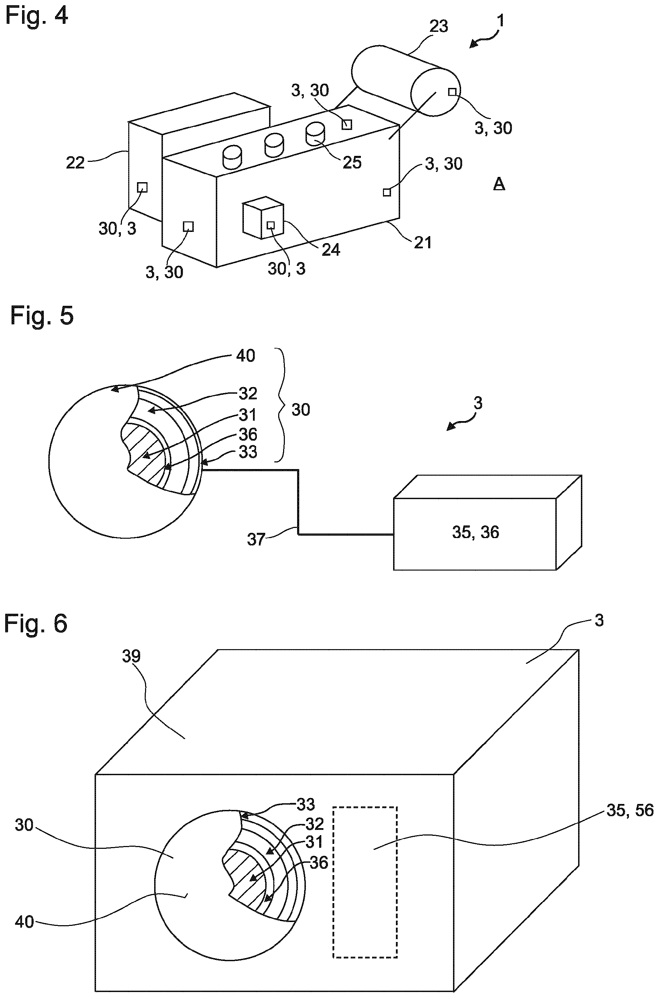

In Figure 4, another example of the electric system 1 is shown. In this example, the static electric induction device is the transformer having the core and the windings and is housed in the transformer tank 21. At the transformer tank 21, optionally there is a radiator 22 for dissipating waste heat and a conservator tank 23 to handle an insulating liquid the transformer 2 is in, or the radiator 22 is located adjacent to the tank 21 but connected with a piping for the insulating liquid. Further, there can be bushing turrets 25 for supporting, holding and/or fixing transformer bushings for DC and AC input lines and output lines. A control box 24 can also be present.

These components 21, 22, 23, 24, 25 may have different requirements concerning the protection level against corrosion. Thus, said components 21, 22, 23, 24, 25 may be provided with different protective coatings, not shown in Figure 4. These different protective coatings may be monitored by a plurality of the EIS sensors 3 or of the sensor probes 30. In each one of the illustrated locations there can be just the sensor probe 30 or also the full EIS sensor 3.

In addition to different protective coatings, there can be a plurality of the EIS sensors 3 or of the sensor probes 30 at the same component, for example, at the transformer tank 2. By means of such an arrangement, it can be accounted for that corrosion progresses with different rates at different locations of the transformer tank 21, for example, due to different wind conditions or different exposure to seawater and/or salt. The same applies analogously to all other components 22, 23, 24, 25 of the electric system 1.

Otherwise, the same as to Figures 1 to 3 may also apply to Figure 4, and vice versa.

In Figure 5 it is illustrated that the sensor probe 30 carrying the test portion 40 is connected with the evaluation unit 35 of the EIS sensor by a cable 37. The cable 37 may be integrated in or attached to the respective component 21, 22, 23, 24, 25 or may run at least at places distant from the respective component 21, 22, 23, 24, 25.

According to Figure 6, the EIS sensor 3 comprises a housing 39 in which both the evaluation unit 35 and the sensor probe 30 are placed, optionally the transmitter 56 could also be located in the housing 39. For example, the housing 39 is of a same metallic material as a hull of the assigned component 21, 22, 23, 24, 25. The housing 39 and, thus, the sensor probe 30 can be coated with the relevant protective coating so that the housing 39 and the EIS sensor 3 may have the same level of protection as the assigned component 21, 22, 23, 24, 25 and so that the housing 39 may correspond to the hull of the assigned component 21, 22, 23, 24, 25.

Otherwise, the same as to Figures 1 to 4 may also apply to Figures 5 and 6, and vice versa.

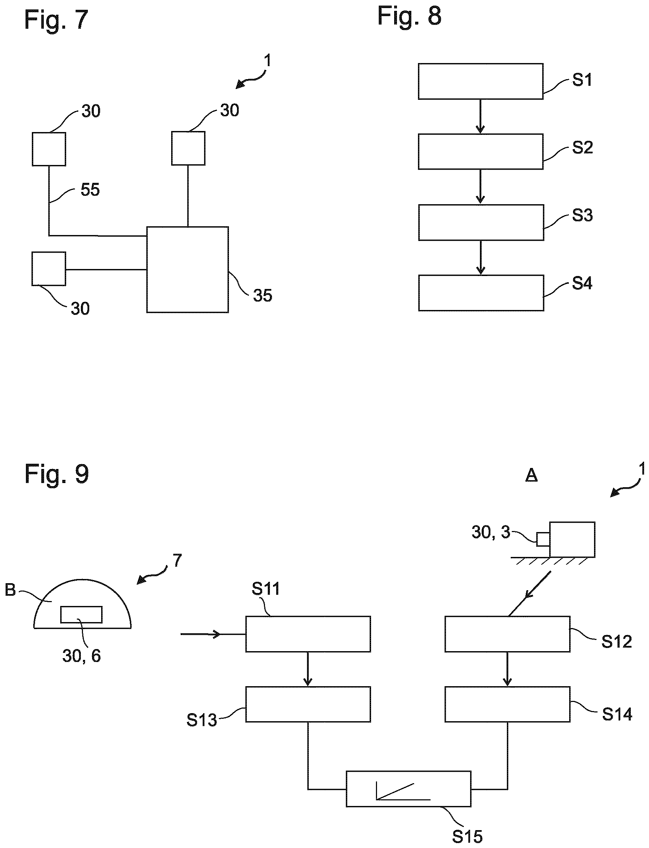

In Figure 7 an example of the EIS sensor 3 is shown in which there is one evaluation unit 35 which is connected to a plurality of the sensor probes 30. Hence, there could be a wiring 55. Such an arrangement can be present in all the examples of the electric system 1, and optionally the sensor probes 30 assigned to the same evaluation unit 35 may be assigned to different ones of the components 21, 22, 23, 24, 25.

The arrangement of Figure 7 may both be implemented in the case of Figure 5 as well as in the case of Figure 6.

Otherwise, the same as to Figures 1 to 6 may also apply to Figure 7, and vice versa.

In Figure 8, an example of a corrosion determination method for the electric system 1 of any one of the above examples is schematically illustrated. In a method step S1, a first one 6 and a second one 3 of the EIS sensors are provided.

Then, in method step S2, an accelerated aging test with the first one of the EIS sensors 6 is performed. This is done, for example, in a test exterior B. By doing so, a predefined range of the corrosion indication parameter, like an impedance and/or parameters of a Nyquist plot, is determined.

In a subsequent method step S3, the second one of the EIS sensors 3 is provided with the predefined range of the corrosion indication parameter.

Then, in method step S4 the second one of the EIS sensors 3 is placed in the electric system 1 which is placed in the field.

Otherwise, the same as to Figures 1 to 7 may also apply to Figure 8, and vice versa.

In Figure 9, another example of the corrosion determination method is illustrated. The EIS sensors 3, 6 in this example may be, for example, smart labels.

In method step S11, the calibration EIS sensor 6 or at least the respective sensor probe 30 is placed in an aging test machine 7. In the aging test machine 7, there is a test exterior B. Optionally, the test exterior B is much harsher than that the exterior A later in the field to do the accelerated ageing. An aging test performed in the aging test machine 7 may last, for example, for at least 10² h and for at most 10³ h. During the aging test, measurement of the EIS sensor 3 is done in real time, The at least one corrosion indication parameter is determined so that a time dependency of the at least one corrosion indication parameter is obtained.

In method step S12, a test of the EIS sensor 3 is done in real time and in the field. In method step S14, variations of the at least one corrosion indication parameter of said EIS sensor 3 are monitored; method steps S12 and S14 may be performed simultaneously. Furthermore, as an option there can be an assigned protective coating, a status of the protective coating over time may be correlated to the at least one corrosion indication parameter, for example, by means of visual inspection or another suitable test to determine the status of the protective coating.

In method step S15, a correlation built-up is performed between the at least one corrosion indication parameter of the EIS sensor 3 in the field in the exterior A on the one hand and the calibration EIS sensor 6 or sensor probe 30 and/or the result of the visual inspection or the other suitable test on the other hand. Optionally, on the protective coating the accelerated aging test may also be performed, and the status of the coating during the accelerated aging test may be correlated with the corrosion indication parameter of the calibration EIS sensor 6 or the respective sensor probe.

Optionally, in method step S13 a protection level of the EIS sensor or the respective sensor probe 30 and/or of the protective coating may be determined based on the accelerated aging test and/or based on the test in the field in real time.

Otherwise, the same as to Figures 1 to 8 may also apply to Figure 9, and vice versa.

In Figure 10, an electronic configuration of the EIS sensor 3 is illustrated in some detail. The remote communication unit 8 and optionally the transmitter 56 do not need to be part of the EIS sensor 3 itself.

In this example, the electrodes 32, 33 are addressed electrically in parallel by means of amplifiers AMP and analog-digital converters A/D as well as a digital-analog converter D/A. It is noted that the set-up of Figure 10 is shown only schematically; especially the, converters D/A, A/D and the amplifiers AMP could partially or completely be included in the chip having the evaluation unit 35.

For example, the evaluation unit 35 applies a small sinusoidal AC perturbation with a general wave signal of about 5 mV to 50 mV at the AC frequencies ranging, for example, from 10 Hz to 100 kHz, the current formed on the top surface of the EIS sensor probe 30 at the test portion 40. The current and electric potential are measured, and then by an I-V conversion circuit and a phase angle correlation method to determine the impedance modulus value and phase angle for the coating on the EIS sensor probe 30 are calculated. The characteristic frequency and specific capacitance of the maintained coating can be calculated according to its impedance modulus value and phase angle.

The specific modulus of impedance, characteristic frequency, specific phase angle and specific capacitance could be the indicators for coating degradation and failure.

Due to the typically high input impedance of the electrode 31, the electrodes 32, 33 are in general connected electrically in parallel, however, other configurations are in principle possible as well.

Otherwise, the same as to Figures 1 to 9 may also apply to Figure 10, and vice versa.

Finally, in Figure 11 a variation of the impedance at 0.1 Hz during the accelerated aging test is shown. It can be seen that corrosion of the test portion 40 is well-correlated to the corrosion of the protective coating 4. Depending on the time t during the aging test and, thus, with progressing corrosion, the determined impedance significantly changes so that corrosion can efficiently be monitored.

The invention described here is not restricted by the description on the basis of the exemplary embodiments. Rather, the invention encompasses any new feature and also any combination of features, which includes in particular any combination of features in the patent claims, even if this feature or this combination itself is not explicitly specified in the patent claims or exemplary embodiments.

### List of Reference Signs

- 1: electric system
- 2: static electric induction device (transformer)
- 21: transformer tank
- 22: radiator
- 23: conservator tank
- 24: control box
- 25: bushing turret
- 3: electrochemical impedance spectroscopy sensor (EIS sensor)
- 30: sensor probe
- 31: working electrode
- 32: reference electrode
- 33: counter electrode
- 34: substrate
- 35: evaluation unit
- 36: electric insulation
- 37: cable
- 38: electric terminal
- 39: housing of the EIS sensor
- 4: protective coating
- 40: test portion of the protective coating
- 51: first connection means
- 52: second connection means
- 53: holder
- 54: connection track
- 55: wiring
- 56: transmitter
- 6: calibration ER sensor
- 7: aging test machine
- 8: remote communication unit
- A: exterior around the transformer system in the field
- AC: electric alternating current
- A/D: analog-digital converter
- AMP: amplifier
- B: test exterior
- C: electric capacitance
- D/A: digital-analog converter
- D31: mean diameter of the working electrode
- D33: mean diameter of the counter electrode
- R: electric resistor
- S: method step
- T: thickness of the electrodes

## Claims

1. An electric system (1) comprising a static electric induction device (2) and an electrochemical impedance spectroscopy, EIS, sensor (3), wherein
- the electric system (1) further comprises a protective coating (4) to protect a component (21, 22, 23, 24, 25) of the electric system (1) from an exterior (A) of the electric system (1),
- the EIS sensor (3) comprises a working electrode (31), a reference electrode (32) and a counter electrode (33), a test portion (40) of the protective coating (4) directly extends across the working electrode (31), the reference electrode (32) and the counter electrode (33),
- the working electrode (31) is of areal fashion and is surrounded by the reference electrode (32), the latter being surrounded by the counter electrode (33), seen in top view of the test portion (40), and
- the EIS sensor (3) is configured to provide information about a corrosion state of the protective coating (4).

2. The electric system (1) according to the preceding claim, wherein the working electrode (31) is an innermost electrode of the EIS sensor (3) and, seen in top view test portion (40), is a continuous and uninterrupted electrode completely covered by the test portion (40),
wherein the test portion (40) is configured to be in direct contact with the exterior (A),
wherein in intended use of the electric system (1) the exterior (A) is a gas comprising oxygen and water vapor, and
wherein the static electric induction device (2) is a transformer and the component is selected from the following group: transformer tank (21), radiator (22), conservator tank (23), control box (24), bushing turret (25).

3. The electric system (1) according to any one of the preceding claims,
wherein, seen in top view of the test portion (40), the working electrode (31), the reference electrode (32) and the counter electrode (33) are of rotational symmetric fashion and are arranged in a concentric manner.

4. The electric system (1) according to any one of the preceding claims,
wherein the EIS sensor (3) further comprises an evaluation unit (35) being configured to determine at least one of an impedance, an electric resistance, an inductance, a phase angle or a capacitance of the test portion (40) by means of the working electrode (31), the reference electrode (32) and the counter electrode (33),
wherein the evaluation unit (35) is configured to measure and/or to calculate a corrosion indication parameter from at least one of the impedance, the electric resistance, the inductance, the phase angle or the capacitance of the test portion (40),
wherein the evaluation unit (35) is further configured to output a corrosion status warning when the corrosion indication parameter leaves a predefined range, the corrosion status warning being indicative of a degree of corrosion of the protective coating (4).

5. The electric system (1) according to the preceding claim, wherein the at least one of the impedance, the electric resistance, the inductance, the phase angle or the capacitance of the test portion (40) is determined at a test frequency of at most 100 kHz.

6. The electric system (1) according to any one of the two preceding claims,
wherein the evaluation unit (35) is an integral part of the component (21, 22, 23, 24, 25),
wherein the evaluation unit (35) and at least one of the working electrode (31), the reference electrode (32) and the counter electrode (33) are connected with the evaluation unit (35) by means of a wiring (55).

7. The electric system (1) according to any one of the preceding claims,
wherein the EIS sensor (3) further comprises a substrate (34) at which the working electrode (31), the reference electrode (32) and the counter electrode (33) are arranged.

8. The electric system (1) according to the preceding claim, wherein the substrate (34) together with the working electrode (31), the reference electrode (32) and the counter electrode (33) as well as the test portion (40) is an adhesive label.

9. The electric system (1) according to any one of the preceding claims,
wherein, seen in top view, a mean diameter (D31) of the working electrode (31) is at least 0.5 mm and is at most 15 cm and a mean diameter (D33) of the counter electrode (33) is at least 1.3 times and at most thrice the mean diameter (D31) of the working electrode (31),
wherein a thickness (T) of the working electrode (31), the reference electrode (32) and the counter electrode (33) is at least 0.01 mm and is at most 5 mm.

10. The electric system (1) according to any one of the preceding claims,
wherein the test portion (40) is an integral part of the protective coating (4) directly at the component (21, 22, 23, 24, 25).

11. The electric system (1) according to any one of claims 1 to 9,
wherein the working electrode (31), the reference electrode (32) and the counter electrode (33) are close to the component (21, 22, 23, 24, 25),
wherein the test portion (40) covering the working electrode (31), the reference electrode (32) and the counter electrode (33) is distant from the protective coating (4) directly at the component (21, 22, 23, 24, 25).

12. The electric system (1) according to any one of claims 1 to 9,
wherein the working electrode (31), the reference electrode (32) and the counter electrode (33) are distant from the component (21, 22, 23, 24, 25),
wherein the test portion (40) covering the working electrode (31), the reference electrode (32) and the counter electrode (33) is distant from the protective coating (4) directly at the component (21, 22, 23, 24, 25).

13. The electric system (1) according to any one of the preceding claims,
further comprising a remote communication unit (8),
wherein the EIS sensor (3) further comprises a transmitter (56),
wherein the transmitter (56) is configured to send the information about the corrosion state of the protective coating (4) to the remote communication unit (8), and wherein a distance between the remote communication unit (8) and the transmitter (56) is at least 1 km.

14. The electric system (1) according to any one of the preceding claims,
comprising a plurality of the components (21, 22, 23, 24, 25), a plurality of the test portions (40) and assigned ones of the working electrode (31), the reference electrode (32) and the counter electrode (33), and a plurality of the protective coatings (4),
wherein said protective coatings (4) are of different material compositions and/or thicknesses,
wherein said components (21, 22, 23, 24, 25) are each provided with one of the protective coatings (4), and wherein each of said protective coatings (4) is assigned at least one of the test portions (40).

15. A corrosion determination method for an electric system (1) according to at least claim 4 comprising the following steps:
- providing a first one (6) and a second one (3) of the EIS sensors,
- performing an accelerated aging test with the first one of the EIS sensors (6) in a test exterior (B) and determining the predefined range of the corrosion indication parameter,
- providing the second one of the EIS sensors (3) with the predefined range of the corrosion indication parameter, and
- placing the second one of the EIS sensors (3) in the electric system (1).
